# EUROPEAN PATENT APPLICATION

(11) **EP 2 871 604 A1**
(43) Date of publication of application: **13.05.2015**
(21) Application number: 14192102.3
(22) Date of filing: 06.11.2014
(51) Int. Cl.: G06Q 10/10

(54) **Address updates**

(30) Priority: 06.11.2013 US 201314073006
(71) Applicant: NEOPOST TECHNOLOGIES, 92220 Bagneux (FR)
(72) Inventor: Bogad, Michael, Manchester, MO, 63021 (US)
(74) Representative: David, Alain

(57) **Abstract**

Systems and techniques are disclosed that allow a mailer to obtain confirmation of a current address from a recipient, and/or an express request from the recipient to update a mailing address stored by the mailer. In an embodiment, a mailer may send a first mail piece to the recipient, which directs the recipient to access a website or other electronic resource to verify his or her address. Upon receiving express confirmation of the recipient's address, a second mail piece may be sent to the current address, and/or the recipient's address may be updated in the mailer's records.

## Description

### BACKGROUND

To reduce the costs and delays associated with mail that is not properly addressed, address data may be "cleansed" or "corrected," for example by verifying potential addresses against a known-good list of general address data, by submitting the addresses to a verification service, or the like. Such a process may occur, for example, within a mailer's system or prior to an address list being provided to a mailer. Conventional techniques typically compare address data within a mailer's database with other databases that include standard or official address data, such as a United States Postal System (USPS) database. If there is a discrepancy between address data in the mailer's database and the official or known-accurate address data, the mailer's address data may be edited to conform to the official address data. For example, a mailing address may be updated from "West Woods Road" to an official address data of "W Woods Rd". Similarly, where an older address record has an obsolete ZIP code, the record may be updated with a known replacement or extension to the ZIP code. Some updates may be performed where the old address is still valid, but not appropriate for the intended addressee. For example, an old delivery address may be updated to a new delivery address following a move by the recipient.

### BRIEF SUMMARY

The invention provides advantageous methods and systems for verifying and updating records associated with a recipient's mailing address.

In an embodiment, a conflict may be identified between a first mailing address for a recipient and a second mailing address for the recipient. A first mail piece addressed to the recipient at the second mailing address may be generated, which includes an identification of an electronically-accessible resource. A confirmation that the second mailing address is a current address of the recipient may then be received from the recipient via the electronically-accessible resource. A stored record associated with the recipient may be updated to indicate the second mailing address is the current address of the recipient. Similarly, second and subsequent mail pieces may be generated which is addressed to the recipient at the second mailing address. In an embodiment, a second mail piece may include substantive information that a mailer is required to provide to the recipient via the first mailing address. The first mail piece may reference the second mail piece, but exclude substantive information that is present in the second mail piece. In an embodiment, the second mailing address may be confirmed as a current address of the recipient before the second mail piece is generated. In an embodiment, an identity of the recipient may be authenticated before confirmation that the second mailing address is the current address of the recipient is received. After the recipient's identity is verified, an electronic version of the second mail piece may be provided to the recipient, such as via the electronically-accessible resource. The first mail piece may include only, or substantially only, the identification of the electronically-accessible resource, instructions related to the electronically accessible resource, a notification regarding the second mail piece, or a combination thereof. Similarly, the first mail piece may include only, or substantially only an identification of the electronically-accessible resource, instructions related to the electronically accessible resource, or a combination thereof. The recipient may provide other information, such as an indication that the first address is not a current address of the recipient. The information provided to the recipient, such as the first mailing address and the second mailing address, and/or a comparison thereof, may be provided via the electronically-accessible resource. Similarly, additional information, such as verification that a change to the recipient's current mailing address is accurately reflected by an address comparison, an indication that the recipient prefers to receive mailings similar to the second mail piece as electronic communications, and/or other information may be received from the recipient via the electronically-accessible resource.

In an embodiment, a first mail piece addressed to a recipient at a first mailing address may be generated, which includes an identification of an electronically-accessible resource. A confirmation that the recipient wishes to receive a future communication electronically may be received. Absent such a confirmation, the future communication may be planned or scheduled to be sent via a second mail piece. The identity of the recipient may be authenticated prior to the receiving the confirmation that the recipient wishes to receive the future communication electronically.

Additional features, advantages, and embodiments of the disclosed subject matter may be set forth or apparent from consideration of the following detailed description, drawings, and claims. Moreover, it is to be understood that both the foregoing summary and the following detailed description are exemplary and are intended to provide further explanation without limiting the scope of the claims.

### BRIEF DESCRIPTION OF THE DRAWINGS

The accompanying drawings, which are included to provide a further understanding of the invention, are incorporated in and constitute a part of this specification; illustrate embodiments of the invention and together with the detailed description serve to explain the principles of the invention. No attempt is made to show structural details of the invention in more detail than may be necessary for a fundamental understanding of the invention and various ways in which it may be practiced.
FIG. 1 shows an example process and communication flow according to an embodiment of the invention.
FIG. 2 shows an example process according to an embodiment of the invention
FIG. 3 shows an example process for encouraging or enabling a user to make use of electronic document delivery according to an embodiment of the present invention.
FIG. 4 shows an example computer system suitable for use with embodiments of the invention.
FIG. 5 shows an example system and arrangement according to an embodiment of the invention.

### DETAILED DESCRIPTION

In some fields, rules, regulations, and/or guidelines may exist that disallow the updating, editing, or changing of the address data within a mailer's database, even if the mailer learns that the address data is obsolete, outdated, or erroneous. In some cases, such updates may only occur upon the mailer obtaining evidence of an express request from the recipient. In these cases, the mailer may only send any appropriate mail to the recipient using the obsolete, outdated, or erroneous address data in possession of the mailer.

Currently, mailers subject to such requirements often request that any undeliverable as addressed (UAA) mail is returned to the mailer. Once the UAA mail is returned to the mailer, the mailer attempts to determine the recipient's correct address, and then attempts to contact the recipient, confirm the recipient's identity, and process an address change as an express request of the recipient to do so. Such techniques typically are time consuming, require significant effort on behalf of the mailer's employees, and have significant direct fees (such as those associated with return mail, and resource costs) and indirect fees (such as increased accounts payable balances, and the like). Further, such techniques are relatively difficult and/or expensive to automate, thus requiring costly and time-consuming human intervention to implement.

For example, U.S. Medicare regulations currently require Prescription Drug Plan (PDP) sponsors and other similar mailers to follow specific rules that describe how a beneficiary may be contacted if the sponsor learns of an address change, especially in situations where the new address is outside the PDP service area. Generally a mailer is allowed to use a new address, such as obtained from the USPS, to update an address on a specific mailpiece. However, the mailer is prevented from updating the same address in the mailer's database. To update the stored mailing address of the recipient, the mailer must receive a request from the recipient for the update to be made. For example, the database ultimately may be updated when the mailer reaches the recipient and instructs them to go to the local Social Security Administration (SSA) office to update their official address. This update is eventually propagated by the SSA to the mailer. However, it can be difficult or time-consuming to reach the recipient, and often the recipient may not be motivated to submit an address change request in a timely manner.

Other similar restrictions exist in other fields. Also, some mailers may impose self-created restrictions on the manner in which an address database is updated, to prevent changes from being made to the mailer's mailing records without an express request from the recipient. Thus, there is a need for methods and systems which allow for mail sent by a mailer to a recipient to be addressed properly, even in situations in which the mailer is restricted from implementing changes to the mailer's database without an express request from the recipient. There is also a need for efficient techniques and systems to request and receive such express requests, while maintaining a relatively low requirement for effort on the part of the recipient.

Embodiments of the present invention provide systems and techniques for requesting and receiving verification of a recipient's current mailing address, and/or an express request from a recipient to update the recipient's mailing address in a record stored by a mailer.

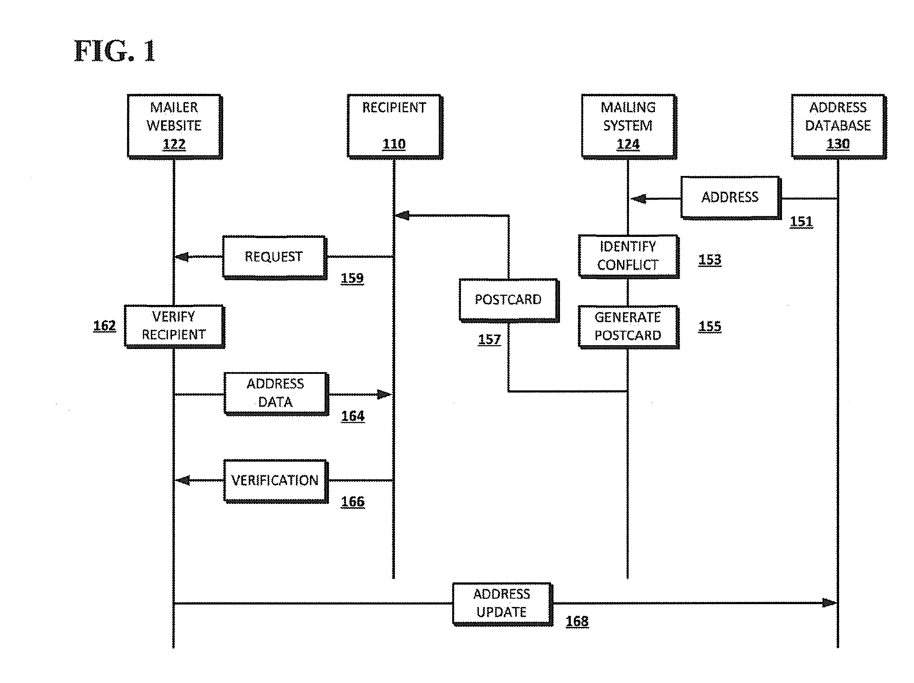

FIG. 1 shows an example process and communication flow according to an embodiment of the invention. Generally, a mailing system 124 may receive one or more addresses at 151, such as from an address database 130. The mailing system 124 may perform address cleansing on the received addresses or on the address database 130 as a whole, such as while preparing a mailing. For example, the mailing system 124 may compare the address(es) received at 151 to known-correct addresses, such as received from the USPS. When a conflict is identified at 153 between a received address and a known-correct address, the mailing system 124 may generate a new mail piece at 155 to be sent to a correct address of the recipient 110. The mail piece may be, for example, a postcard that informs the recipient 110 that the mailer has a mail piece to be delivered to the recipient 110, but which the mailer is prohibited from sending to the recipient's 110 current address. The mail piece may reference the primary (first) mail piece that the mailer ultimately desires to send to the recipient 110 without disclosing its contents. For example, a postcard sent to the recipient 110 at 157 may indicate that the mailer has a mail piece related to the recipient's Medicare benefits, which cannot be sent to the recipient's 110 current address absent an express request. In some configurations, a separate electronic communication, such as an email, text message, or the like may be sent instead of, or in addition to, the postcard or similar mail piece.

The mail piece sent to the recipient 110 at 157 may include an indication of an electronically-accessible resource 122, such as a website, cloud-based service, text auto-responder, or the like, which the recipient 110 may access to verify the recipient's 110 current address. For example, a postcard may include a website address that the recipient 110 may access to view information about the first, non-sent mail piece, verify the recipient's identity and/or mailing address, or the like. The resource 122 may be identified by any appropriate means, such as a website address, an online profile such as a social networking profile, a semantic tag, or the like. It may be presented in human-readable form and/or in machine-readable form, such as a one- or two-dimensional bar code, quick response (QR) code, or the like. The recipient may then access the resource 122 by sending an appropriate request at 159, such as an HTTP request, text message, or the like.

The resource 122 may require the recipient to authenticate their identity sufficiently to verify that the person accessing the resource 122 in conjunction with a specific mail piece is the recipient 110 to whom the mail piece was sent at 162. For example, a website may require a recipient 110 to provide a username and password, account number, social security number or similar identifier, security pass-phrase, mother's maiden name, or the like. The mail piece sent at 157 also may include a unique identifier that is incorporated into the means by which the recipient accesses the resource 122, such as an identifier included as part of a website address, or an access code. This identifier may be used to link the recipient 110 to the specific mail piece. Any other suitable technique for verifying the recipient's identity may be used, as will be readily known to one of skill in the art.

In response to the request 159 and/or any subsequent verification 162, the recipient 110 may be informed at 164 that there is a discrepancy between the mailer's address data and the official address data. For example, the believed known-good mailing address may be displayed to the recipient, and/or a "before" and "after" comparison of the original, believed-incorrect address with the believed known-good address may be provided to the recipient. The resource 122 may ask the recipient 110 to verify the recipient's current address, such as by accepting the "after" version as displayed. The recipient 110 also may be provided an opportunity to provide further updates to the current address, and to request electronic delivery of present and/or future documents, as disclosed in further detail below. The recipient 110 thus may provide verification that the current address is correct at 166, which may be sufficient to meet any requirement that the recipient 110 expressly request an address update.

After receiving appropriate verification, an update 168 may be provided to the address database 130. It may be provided directly, as shown, or it may be provided first to an intermediary system such as the mailing system 124. More generally, although the electronic resource 122, mailing system 124, and address database 130 are shown as separate components for clarity, these components may be implemented in a single system or integrated set of several systems, for example such that the distinction is not readily apparent to a recipient.

Often, the process and communications shown in FIG. 1 will be performed for the purpose of sending a second mail piece (not shown) to the recipient, as previously descried. In this case the address 151 may be provided to the mailing system 124 as part of a bulk or sequential mailing operation, in which the same or similar mail pieces are to be sent to multiple recipients. Whether the second mail piece is part of a bulk operation or not, it may be held for mailing subsequent to the verification 166 and/or address update 168, to prevent mail pieces from being sent to addresses which are believed to be incorrect at the time the mail piece is to be generated and/or mailed.

The process and communications described and illustrated also may be used to allow and/or encourage users to "opt-in" to electronic communications, for example where a mailer can send communications via email or other electronic communication system instead of, or in addition to, physical mail. For example, after a user is authenticated as previously described, or as part of the authentication process, the user may be given the opportunity to opt-in by selecting to receive electronic communications instead of, or in addition to, physical communications. When a user opts-in and there is a communication to be delivered as previously described, it may be provided to the user in an electronic format at that time and/or at a later time.

In some cases, the general procedures and systems shown in FIG. 1 and described herein may be used even if a mailer does not perform address cleansing to identify potential address conflicts as described with respect to FIG. 1. Instead of, or in addition to, performing such address cleansing, a mailer may process returned UAA mail. For example, a scanner may be used to process returned UAA, such as by using multiline optical character reader (MLOCR) to read the recipient information. The system then may, for example, connect to address cleansing software to determine a new or updated address data associated with the recipient information. The postcard-type process as described above may then be followed, using the updated address. As another example, a barcode may be used instead of or in addition to MLOCR scanning, to identify the recipient information via a barcode placed on the mailpiece. In some cases, the barcode may be associated with a specific document, such as where the barcode is printed on the document and visible through a window in an enclosing envelope. In this case, the contents of the document(s) within the UAA mailpiece may be uploaded to the electronic resource 122 and provided to the recipient 110 after the recipient 110 has been authenticated, asked to confirm the new address, and/or allowed to opt-in to electronic communications as described above. Similarly, a unique identifier in the first mail piece sent to the recipient 110 as previously described may allow the recipient 110 to view and/or obtain the second mail piece via the electronic resource 122. Other techniques may be used to provide an electronic copy of the second mail piece to the recipient 110, such as storing the electronic copy in a database and linking it to a known account of the recipient 110.

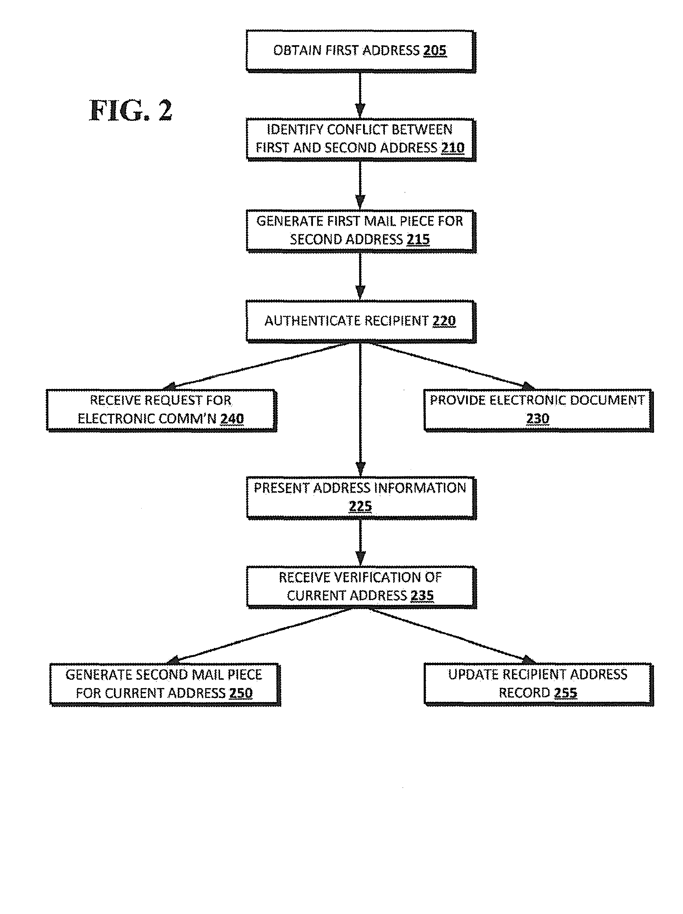

FIG. 2 shows an example process according to an embodiment of the invention, which further illustrates several of the features and options described with respect to FIG. 1. Although shown in a particular order for clarity, the various steps described in FIG. 2 and throughout the present disclosure may be performed in any order unless explicitly indicated otherwise or unless logically required by context. At 205, a first mailing address for a recipient (such as recipient 110 as shown in FIG. 1) may be obtained, such as from a database 130 of recipient addresses, as previously described. A conflict may be identified between the first mailing address and a second mailing address, such as an address obtained from an authoritative source. For example, a conflict may be identified during a cleansing process as previously described. A first mail piece addressed to the recipient at the second mailing address, which includes an identification of an electronically-accessible resource, may be generated at 215. As previously described, the first mail piece may be, for example, a postcard that provides a resource 122, such as a website at which the recipient 110 can verify his current address, and/or an indication of a second mail piece that the mailer wishes to send to the recipient 110.

Upon receiving the first mail piece, the recipient 110 may access the electronic resource 122, such as a website. The resource 122 may authenticate the recipient at 220, such as by requiring the recipient 110 to enter a username and password, personally-identifying information, a unique identifier, or the like. After verifying that the recipient 110 has received the first mail piece and/or authenticating the identity of the recipient 110, several other operations may be performed. At 240, the system may receive a request from the recipient 110 to receive the second mail piece referenced by the first mail piece, and/or subsequent future communications, electronically. For example, the website 122 accessed by the recipient 110 may provide an option for the recipient 110 to "opt-in" to electronic communications instead of, or in addition to, further delivery of physical mail pieces. In addition, or alternatively, at 230 the system may provide an electronic document to the recipient 110. The electronic document may include, for example, a second mail piece that the mailer would have mailed to the recipient, but for the conflict identified at 210.

Alternatively or in addition, various address information may be presented to the recipient at 225. The address information may include the first mailing address, the second mailing address, a comparison of the first mailing address and the second mailing address, or the like. At 235, a verification of the recipient's 110 current address may be received. The verification may include, for example one or more of: an indication that the second address is correct; an indication that a change to the recipient's current mailing address is accurately reflected by a comparison of the first and second addresses; an additional correction to the mailing address made by the recipient; and/or an indication that an email address of the recipient is correct. More generally, the verification may confirm that the second mailing address is a current address of the recipient 110.

After receiving verification of the recipient's 110 current mailing address, a second mail piece may be generated, addressed to the recipient 110 at the second (current and verified) mailing address at 250. Alternatively or in addition, a database 130 record storing the recipient's 110 current mailing address may be updated to reflect the address verified by the recipient 110 at 235. The second mail piece may include substantive information that the mailer is required to provide to the recipient via the first mailing address. For example, it may include personally-identifiable information that, in the absence of express recipient 110 instructions otherwise, government, corporate, or other regulations prevent the mailer from sending to an address different than the first address. As previously described, the first mail piece sent to the recipient 110 at 215 may reference the second mail piece, but exclude the substantive information. For example, the first mail piece may indicate the general nature or subject matter of the second mail piece, or may simply indicate existence of the second mail piece that needs to be delivered to the recipient 110. More generally, the first mail piece may have relatively little content, in some cases including only an identification of the electronically-accessible resource, instructions related to the electronically accessible resource 122, a notification of the second mail piece, or combinations thereof.

In some cases, embodiments of the present invention may be used to encourage or allow recipients 110 to "opt-in" to electronic document delivery of the second mail piece and/or future documents or other communications that the mailer wishes to send to the recipient 110. For example, a recipient110 may be asked by an electronically-accessible resource 110 as disclosed herein if he would like to opt-in to electronic delivery of documents, and thus avoid any future issues associated with paper document delivery. To do so, a first mail piece as disclosed herein may be generated and sent to the recipient 110 even when a conflict between potential addresses for the recipient does not exist, or has not been identified by the system. For example, it may be determined that a recipient 110 has moved to a new address. A first mail piece as disclosed herein may be generated to inform the recipient 110 that he may wish to switch to electronic document delivery to prevent mail pieces from being erroneously sent to his former address. Similarly, a postcard or other mail piece may be sent to a recipient 110 at a known-good address, to encourage him to employ electronic document delivery.

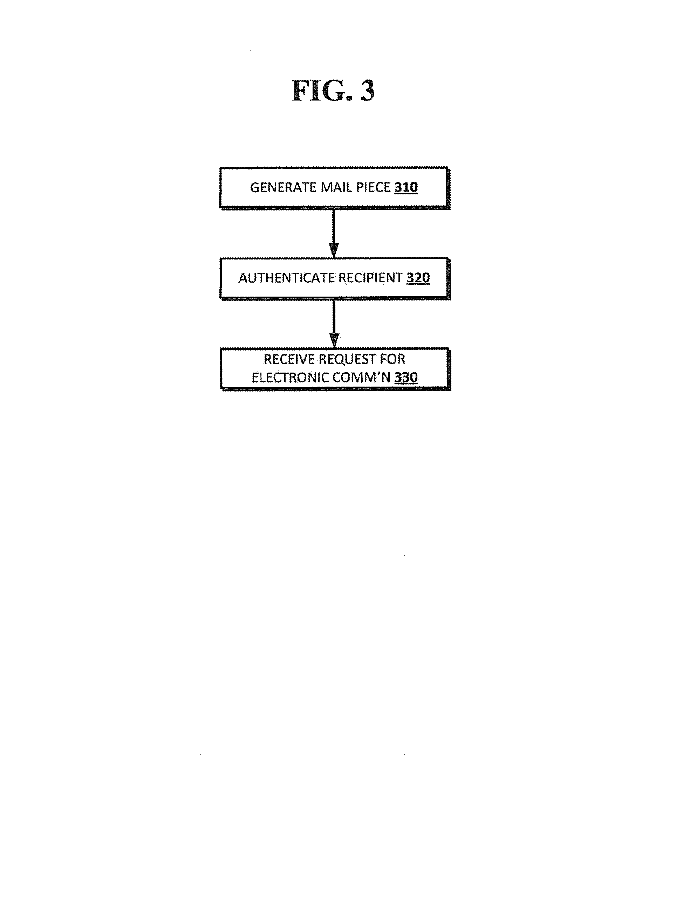

FIG. 3 shows an example process for encouraging or enabling a user (such as the recipient 110) to make use of electronic document delivery according to an embodiment of the present invention. At 310, a mail piece may be generated that identifies an electronically-accessible resource122 such as a website, as previously described. The mail piece may be sent to a recipient 110 at a known-good address, or at an address that has been verified as disclosed herein, or any other suitable mailing address. Upon accessing the website or other resource, the user may be authenticated at 320 as previously described herein. As part of, or separately from, the other procedures disclosed with respect to FIGS. 1 and 2, the user may be asked whether he wishes to receive future communications electronically, such as via email, text message, or the like. The user may indicate a preference for electronic communications, thereby providing a request to receive future communication electronically at step 330.

Various embodiments may deviate from the illustrative structures described herein. For example, the components and modules described may be combined or further split functionally from the specific structures described. As a specific example, a mailing system and an electronically-accessible resource such as a website as disclosed herein each may be implemented as a separate system, or they may be implemented by a single integrated computerized system. Further, while examples of electronically-accessible resources have been described as computer interfaces, it will be appreciated that electronically-accesible resources may include other resources, such as an automated telephony service system. Each of the components may be implemented as a software module or a module that combines software and hardware, and multiple illustrated modules may be combined into a single physical or logical module. Generally, any number of functions may be embodied in any number of modules or components.

Various embodiments may include or be embodied in the form of computer-implemented processes and apparatuses for practicing those processes. Embodiments also may be embodied in the form of a computer program product having computer program code containing instructions embodied in tangible media, such as floppy diskettes, CD-ROMs, hard drives, USB (universal serial bus) drives, or any other machine readable storage medium, wherein, when the computer program code is loaded into and executed by a computer, the computer becomes an apparatus for practicing the invention. Embodiments also may be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for practicing the invention. When implemented on a general-purpose microprocessor, the computer program code segments configure the microprocessor to create specific logic circuits. In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Embodiments may be implemented using hardware that may include a processor, such as a general purpose microprocessor and/or an Application Specific Integrated Circuit (ASIC) that embodies all or part of the method in accordance with the present invention in hardware and/or firmware. The processor may be coupled to memory, such as RAM, ROM, flash memory, a hard disk or any other device capable of storing electronic information. The memory may store instructions adapted to be executed by the processor to perform the method in accordance with an embodiment of the present invention.

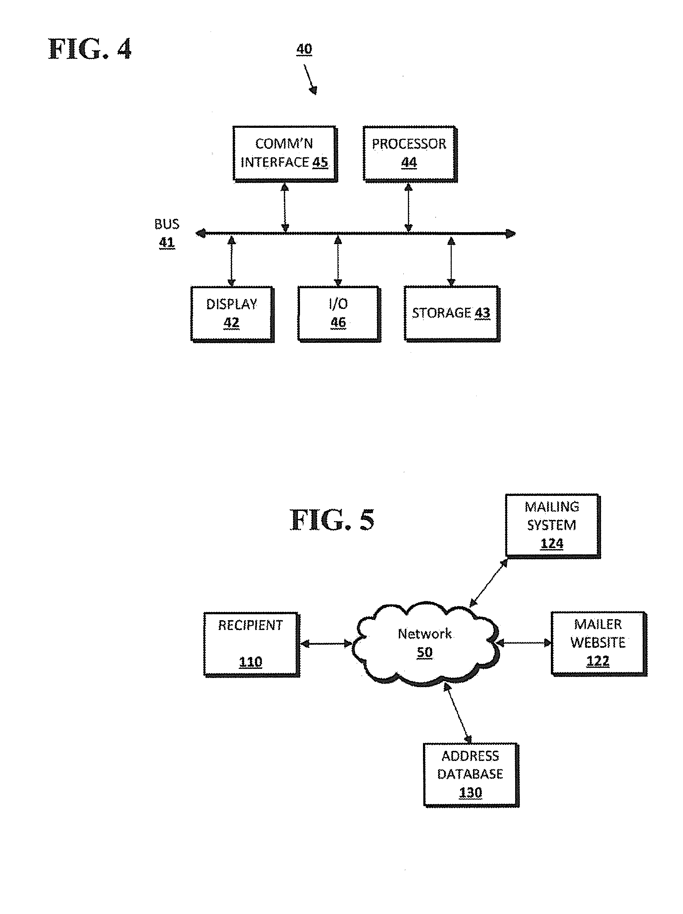

FIG. 4 shows a schematic representation of an example computer 40 suitable for implementing embodiments of the invention. The computer 40 includes a bus 41 which connects major components of the computer 20, such as a processor 44, one or more memory and/or storage components 43 such as RAM, ROM, flash RAM, hard drive, flash drive, network-attached storage interface, or the like, user input/output components such as an I/O controller, keyboard, touchscreen, or the like, an a communication interface 45 such as an Ethernet, WiFi, Internet, local network, wide area network, or similar connection.

The bus 41 allows data communication between the processor 44 and the storage/memory 43. The storage and/or memory generally includes the main memory into which an operating system and application programs are loaded. The storage also can contain, among other code, software which controls basic hardware operation of the system, such as interactions with peripheral components. Applications resident with the computer 20 are generally stored on and accessed via the storage 43. The storage 23 may be integral with the computer 40, or may be separate and accessed through other interfaces. The communication interface 45 may provide a direct connection to one or more remote computer systems via, for example, the Internet and/or wireless techniques such as WiFi, cellular connections, or the like. For example, the communication interface 45 may allow the computer to communicate with other computers via one or more local, wide-area, or other networks, such as illustrated in FIG. 5.

Many other devices or components (not shown) may be connected to the computer 40 in a similar manner (e.g., document scanners, digital cameras and so on). Additional components may be included in the computer system 40 as will be understood by one of skill in the art; conversely, all of the components shown in FIG. 4 need not be present to practice the invention. The components can be interconnected in different ways from that shown. The operation of a computer such as that shown in FIG. 4 is readily known in the art and is not discussed in detail in this application.

FIG. 5 shows an example system and arrangement according to an embodiment of the invention. Each of the recipient, mailing system, mailer website, and address database may communicate with any of the other components via a network 40, such as the Internet, a LAN or WAN, cellular networks, or the like. The communications disclosed herein may be transmitted via the network 40 and/or any suitable intermediary, such as where address updates are relayed to the address database by the mailing system. As previously described, the mailing system, mailer website, and address database may be implemented in one or more systems, and need not be physically distinct to match the illustrative arrangement shown in FIG. 5.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as may be suited to the particular use contemplated.

## Claims

1. A method comprising:
identifying a conflict between a first mailing address for a recipient and a second mailing address for the recipient;
generating a first mail piece addressed to the recipient at the second mailing address, the first mail piece including an identification of an electronically-accessible resource;
receiving, from the recipient via the electronically-accessible resource, a confirmation that the second mailing address is a current address of the recipient; and
updating a stored record associated with the recipient to indicate the second mailing address is the current address of the recipient.

2. The method of claim 1, further comprising:
generating a second mail piece addressed to the recipient at the second mailing address.

3. The method of claim 2, wherein the second mail piece comprises substantive information that a mailer is required to provide to the recipient via the first mailing address.

4. The method of claim 3, wherein the first mail piece references the second mail piece, and wherein the first mail piece excludes the substantive information.

5. The method of claim 1, further comprising:
authenticating an identity of the recipient prior to the step of receiving the confirmation that the second mailing address is the current address of the recipient.

6. The method of claim 5, further comprising:
subsequent to the step of authenticating the identity of the recipient, providing an electronic version of a second mail piece to the recipient via the electronically-accessible resource.

7. The method of claim 6, wherein the first mail piece consists essentially of the identification of the electronically-accessible resource, instructions related to the electronically accessible resource, a notification regarding the second mail piece, or a combination thereof.

8. The method of claim 1, wherein the first mail piece consists essentially of the identification of the electronically-accessible resource, instructions related to the electronically accessible resource, or a combination thereof.

9. The method of claim 1, further comprising:
receiving verification from the recipient that the first address is not a current address of the recipient.

10. The method of claim 1, further comprising:
presenting, to the recipient via the electronically-accessible resource, the first mailing address and the second mailing address.

11. The method of claim 1, further comprising:
presenting, to the recipient via the electronically-accessible resource, a comparison of the first mailing address and the second mailing address.

12. The method of claim 11, further comprising:
receiving, from the recipient via the electronically-accessible resource, verification that a change to the recipient's current mailing address is accurately reflected by the comparison.

13. The method of claim 1, further comprising:
receiving an indication from the recipient that the recipient prefers to receive mailings similar to the second mail piece as electronic communications.

14. A method comprising:
generating a first mail piece addressed to a recipient at a first mailing address, the first mail piece including an identification of an electronically-accessible resource;
receiving, from the recipient via the electronically-accessible resource, a confirmation that the recipient wishes to receive a future communication electronically, wherein the future communication is planned to be sent via a second mail piece in the absence of the confirmation.

15. The method of claim 14, further comprising:
authenticating the identity of the recipient prior to the step of receiving the confirmation that the recipient wishes to receive the future communication electronically.
